# EUROPÄISCHE PATENTSCHRIFT

(11) **EP 2 871 356 B1**
(45) Veröffentlichungstag und Bekanntmachung des Hinweises auf die Patenterteilung: **15.02.2017**
(21) Anmeldenummer: 14190803.8
(22) Anmeldetag: 29.10.2014
(51) Int. Cl.: F03B 3/14

(54) **Verstelleinrichtung für die Laufradflügel einer Turbine**
Actuating device for the impeller blades of a turbine
Dispositif de réglage pour les aubes d'une turbine

(30) Priorität: 07.11.2013 AT 8532013; 24.07.2014 AT 5872014
(43) Veröffentlichungstag der Anmeldung: 13.05.2015
(73) Patentinhaber: Andritz Hydro GmbH, 1120 Wien (AT)
(72) Erfinder: Winkler, Stefan, 4060 Linz (AT); Wurm, Erich, 4232 Hagenberg (AT); Geromiller, Johannes, 99273 Fronreute (DE)
(74) Vertreter: Schweinzer, Friedrich

(56) Entgegenhaltungen:
- EP-A2- 2 458 209
- GB-A- 562 845
- GB-A- 750 951
- US-A- 2 951 380
- US-A1- 2010 066 089

## Beschreibung

Die Erfindung betrifft eine Verstelleinrichtung für die Laufradflügel von Turbinen, die an einer Nabe angeordnet sind, wobei ein hydraulischer Servozylinder vorgesehen ist, wobei ein weiterer Servozylinder vorgesehen ist.

Verstellsysteme von Turbinenschaufeln sind z.B. aus der US 2,951,380 bekannt, die eine Vorrichtung zur wechselseitigen Verstellung von Turbinenschaufeln zeigt. Der Verstelllenker des zweiten Servomotors ist hier mit einem Zahnradsegment verbunden, das in ein weiteres Zahnradsegment an der Verstellkurbel eingreift. Eine 360° Drehung der Turbinenschaufel ist hier nicht möglich.

Laufradflügel Verstelleinrichtungen werden z.B. bei Kaplanturbinen eingesetzt um bei allen Durchflussmengen immer den günstigsten Wirkungsgrad zu erzielen. Der Verstellbereich der Laufradflügel bei einseitig durchströmten Axialturbinen liegt dabei bei ca. 30°. Bei reversiblen Axialturbinen, die in beiden Richtungen durchströmt werden, erhöht sich der erforderliche Verstellbereich zur optimalen Laufradflügelstellung auf mindestens etwa 200°. Dies ist mit der bisherigen Lösung mit einem hydraulischen Servozylinder nicht realisierbar, da hier in einer Winkelstellung ein Totpunkt auftritt, bei dem der Momentenarm des Servozylinders zu null wird und somit eine weitere Verstellung nicht mehr realisiert werden kann.

Alternative Lösungen gibt es insoweit, als zum einen ein symmetrisches Flügelprofil mit reduziertem Wirkungsgrad gewählt wird, zum anderen die Verstellbewegung beispielsweise mittels Zahnstangen durchgeführt wird.

Ziel der Erfindung ist es daher eine Lösung der Verstellung der Laufradflügel auch für reversible Axialturbinen anzubieten.

Dies erfolgt erfindungsgemäß dadurch, dass die Verstelllenker der Servozylinder mit einem Ende an der mit der Achse des Laufradflügels fest verbundenen Verstellkurbel drehbar gelagert sind und eine Bewegung für eine 360° Drehung des Laufradflügels ermöglichen.

Eine vorteilhafte Weiterbildung der Erfindung ist dadurch gekennzeichnet, dass die Lager der Verstelllenker außermittig, d.h. außerhalb der Drehachse der Nabe, angeordnet sind, wobei die Servozylinder konzentrisch angeordnet sein können. Dadurch können einerseits die Servozylinder konzentrisch angeordnet sein, was platzsparend ist. Andererseits haben beide Servozylinder in jeder Kurbelstellung immer genügend Kraft um die Kurbel anzutreiben.

Eine alternative Ausgestaltung der Erfindung ist dadurch gekennzeichnet, dass die Servozylinder als Einzelzylinder ausgeführt sind, wobei die Servozylinder eine gemeinsame Kolbenstange aufweisen können.

Besonders günstig hat sich erwiesen, wenn der Hilfs-Servozylinder im Bereich des Totpunktes des Verstelllenkers des Haupt-Servozylinders die Flügelverstellung übernimmt, wobei der Hilfs-Servozylinder vorzugsweise den übrigen Teil des Hubs drucklos ist. Damit kann mit einem geringen Energieaufwand die Verstellung über den gesamten Stellbereich ermöglicht werden.

Die Erfindung wird nun anhand der Zeichnungen beispielhaft beschrieben, wobei
Fig. 1 eine Ansicht einer Turbine bei der die Erfindung angewendet wird zeigt,
Fig. 2 eine schematische Darstellung der erfindungsgemäßen Verstelleinrichtung
Fig. 3 eine erfindungsgemäße Ausgestaltung der Verstelleinrichtung
Fig. 4 eine alternative Ausgestaltung der erfindungsgemäßen Verstelleinrichtung
Fig. 5a bis Fig. 5h den Ablauf der Verstellung der Flügel bei einer Drehung um 360°,
Fig. 6 eine weitere Ausgestaltung der erfindungsgemäßen Verstelleinrichtung,
Fig. 7 einen Schnitt durch Fig. 6 entlang der Linie VII- VII
Fig. 8 einen Schnitt durch eine Turbinennabe mit einer alternativen Anordnung gemäß der Erfindung und
Fig. 9a bis Fig. 9e den Ablauf der Verstellung der Flügel bei der alternativen Anordnung darstellt.

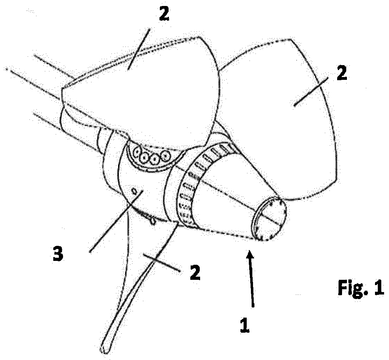

Fig. 1 zeigt ein Kaplanlaufrad 1, das in diesem Beispiel drei Flügel oder Laufradschaufeln 2 aufweist, die an der Laufradnabe 3 dreh- bzw. schwenkbar befestigt sind. Durch diese Verstellbarkeit wird gewährleistet, dass die Laufradflügel 2 immer in der optimalen Position für einen optimalen Wirkungsgrad sind. Die Stellung der Laufradflügel 2 wird somit immer an den Wasserstrom angepasst. Ein derartiges Laufrad 1 kann auch als Axiallaufrad in Rohrleitungen eingesetzt werden. Hier tritt dann bei Fällen mit Strömungsumkehr das Problem auf, dass das Laufrad im Allgemeinen nur für eine Strömungsrichtung hinsichtlich des Wirkungsgrades optimal ausgeführt sein kann. Um das zu umgehen werden hier dann oft Laufradflügelgeometrien gewählt, die zwar für die einzelne Strömungsrichtung nicht optimal, in Summe für beide Richtungen aber entsprechend angepasst sind.

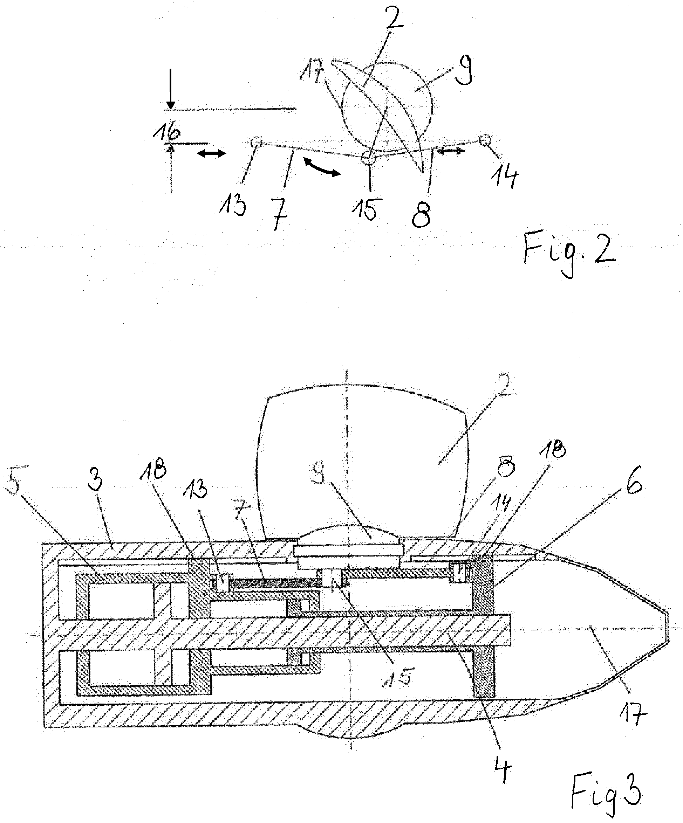

In Fig. 2 zeigt eine schematische Darstellung einer erfindungsgemäßen Vorrichtung. Man erkennt einen Laufradflügel 2, der mit einem Schaufelteller oder Verstellkurbel 9 verbunden ist. Am Kurbelzapfen 15 greifen die beiden Lenker 7, 8 der beiden Servozylinder an, wobei die Lenkerlager 13 (linker Servozylinder) und Lenkerlager 14 (rechter Servozylinder) in einem Abstand 16 von der Drehachse 17 der Nabe angeordnet sind. Vorteilhafterweise ist die Verbindungslinie der Lenkerlager 13, 14 parallel zur Achse 17 der Nabe 3 angeordnet.

Fig. 3 zeigt eine Variante einer erfindungsgemäßen Verstelleinrichtung, wobei hier die beiden Servozylinder kombiniert und in einem gemeinsamen Zylindergehäuse angeordnet sind. Die in der Nabe 3 drehbar gelagerte Laufradflügel 2 ist durch zwei linear wirkende Aktuatoren 5 und 6 (im Normalfall Hydraulikzylinder) über Lenker (Pleuel) 7, 8 mit dem Kurbelzapfen 15 der Verstellkurbel 9 drehbar gelagert verbunden. Durch die außermittige Anordnung der Lenkerlager 13,14 ist auch, wenn ein Lenker 7,8 sich in einer Totpunktstellung befindet gewährleistet, dass der andere Lenker die Verstellkurbel 9 antreiben kann. Die Umfangsführungen 18 übertragen die Lenkerreaktionskräfte auf die Nabe 3. Die beiden Servozylinder 5, 6 sind dabei auf einer gemeinsamen Kolbenstange 4 angeordnet. Diese Anordnung stellt eine sehr kompakte Bauform dar.

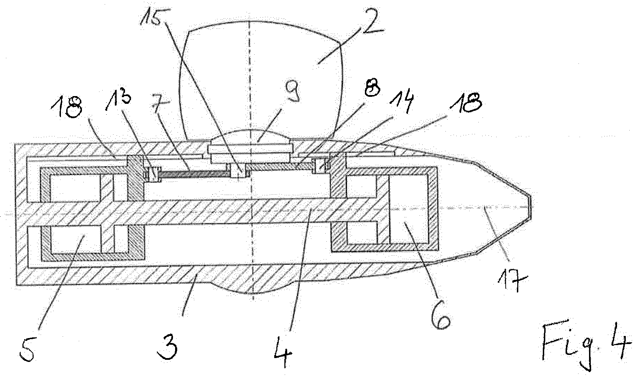

In Fig. 4 ist eine weitere Variante der Erfindung dargestellt, wobei hier zwei einzelne Servozylinder 5, 6 vorgesehen sind. Auch hier sind die Lenkerlager 13, 14 der beiden Lenker 7, 8 außermittig angeordnet sind, d.h. die Lager 13, 14 liegen außerhalb der Nabenachse 17.

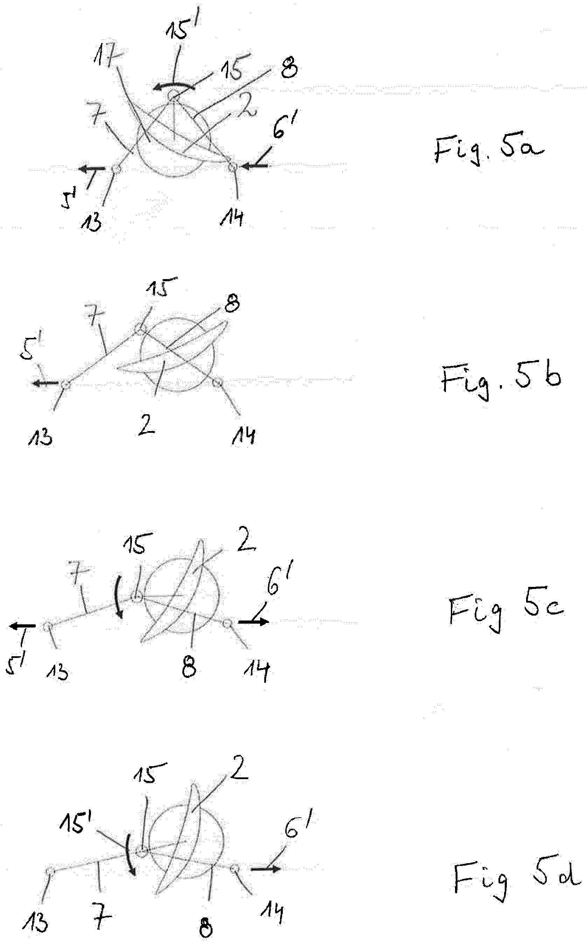

Die Fig. 5a bis 5h zeigen den Ablauf der Bewegung für eine 360° Drehung eines Laufradflügels 2. Die jeweilige Bewegung der Zylinder 5, 6 wird durch die Pfeile5' bzw. 6' dargestellt. Die Bewegung des Kurbelzapfens 15 wird mit dem Pfeil 15' bezeichnet.

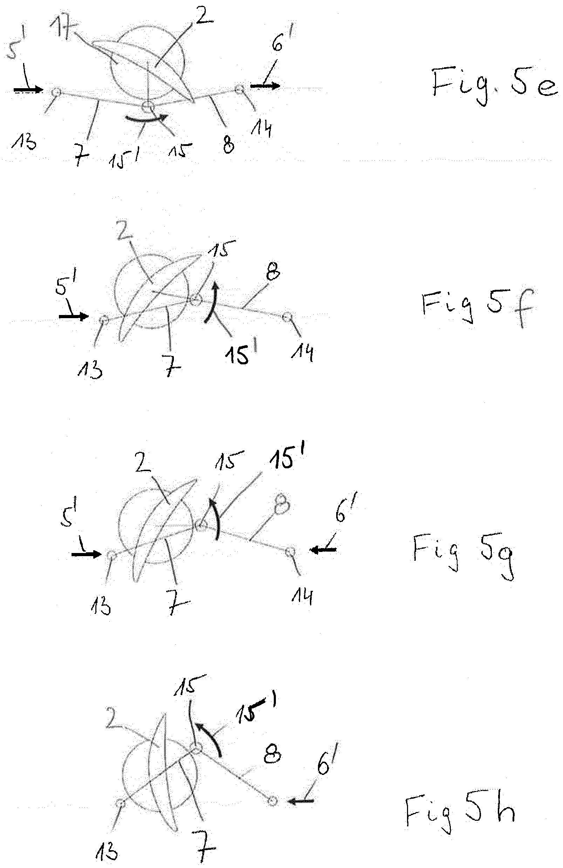

Fig. 5 a zeigt eine Bewegung der Servozylinder 5, 6 in die gleiche Richtung 5' und 6' nach links. Dadurch bewegt sich der Kurbelzapfen 15 vom Scheitelpunkt weg in Richtung 15' gegen den Uhrzeiger. In Fig. 5b ist dann der 1. Totpunkt (links) des Zylinders 6 erreicht (daher kein Pfeil 6'). Der linke Zylinder 5 übernimmt hier die volle Zugkraft für die Drehung des Kurbelzapfens 15. Nach Überwindung dieses Totpunktes von Zylinder 6 wirkt dieser wieder in Richtung Pfeil 6' nach rechts während Zylinder 5 weiterhin in Richtung 5' nach links wirkt. (Fig. 5 c). Dies erfolgt, bis der 1. Totpunkt (links) von Zylinder 5 erreicht ist. (Fig. 5 d) Hier übernimmt dann Zylinder 6 die volle Zugkraft zur Drehung des Kurbelzapfens 15 in Richtung 15'.

Nun greift wieder die Kraft von Zylinder 5 in Richtung 5', nach rechts, wobei bald der untere Scheitelpunkt des Kurbelzapfens 15 erreicht ist. Damit hat auch der Laufradflügel 2 eine Drehung um 180° gemacht. (Fig. 5e) Die Bewegung erfolgt weiter bis der 2. Totpunkt (rechts) für Zylinder 6 erreicht ist (siehe Fig. 5 f). Nun wird der Kurbelzapfen 15 gemäß Fig. 5g weiter gedreht, bis der 2. Totpunkt (rechts) von Zylinder 5 (gemäß Fig. 5h) erreicht ist und Zylinder 6 die volle Kraft übernimmt. Damit schließt sich dann der Bewegungsablauf mit Fig. 5a, wodurch eine volle Drehung des Laufradflügels um 360° erfolgt ist.

Im Allgemeinen ist eine volle Drehung nicht erforderlich, sondern die Stellung des Laufradflügels 2 erfolgt zwischen zwei Positionen, wobei hier dann die Bewegung nach Erreichen der "Endposition" gegenläufig erfolgt und in etwa einen Bereich von 220° überstreicht.

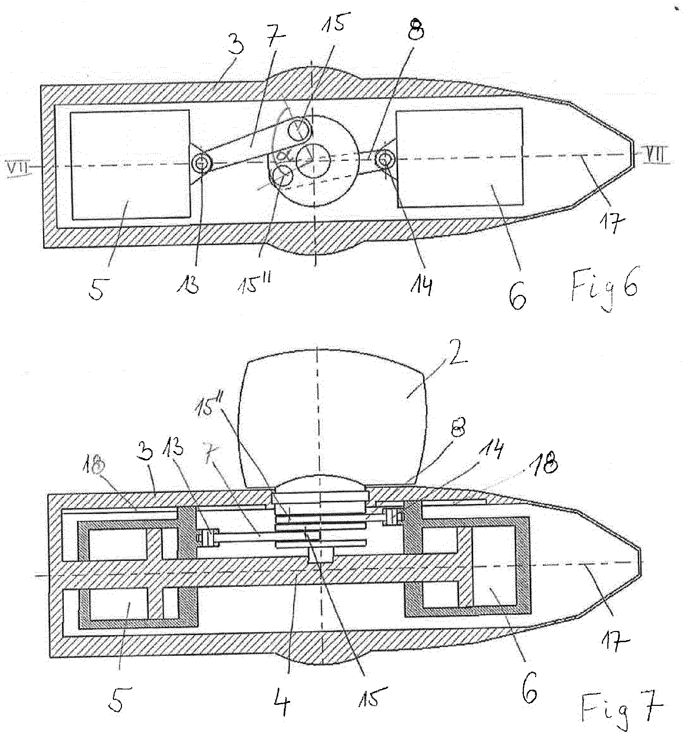

In Fig. 6 ist eine alternative Ausgestaltung der Erfindung dargestellt, bei der die Verstelllenker 7, 8 an unterschiedlichen Kurbelzapfen 15, 15" angreifen. Die Kurbelzapfen 15, 15" weisen dabei um die Drehachse der Laufradflügel einen Winkel α zueinander auf. Dieser Winkel beträgt vorzugsweise 90°, kann aber auch größer, beispielsweise 120°, sein.

Fig. 7 zeigt einen Schnitt durch Fig. 6 entlang Linie VII - VII, d.h. entlang der Drehachse der Nabe. Diese Darstellung entspricht Fig. 4, wobei hier die Verstelllenker 7, 8 in unterschiedlichen Abständen von der Drehachse angeordnet sind und an unterschiedlichen Kurbelzapfen 15, 15" angreifen. Alle übrigen Teile entsprechen denen in Fig. 4 und sind mit denselben Bezugszeichen versehen.

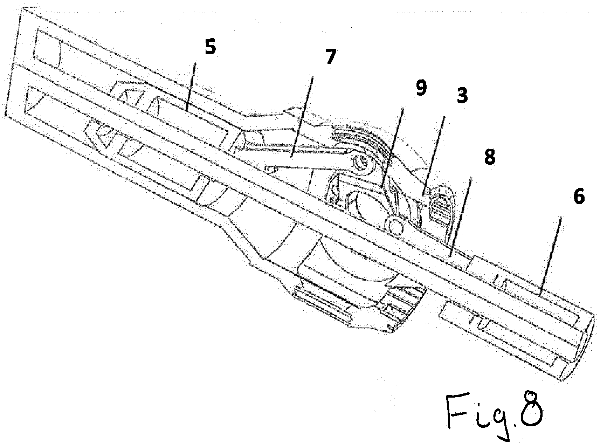

Fig. 8 zeigt nun eine alternative Ausführung der Verstelleinrichtung gemäß der Erfindung, wobei hier lediglich die Laufradnabe 3 ohne die entsprechenden Laufradflügel dargestellt ist. Es ist diese Verstelleinrichtung auch nur für einen Laufradflügel dargestellt, obwohl sie gleichzeitig für alle Laufradflügel, d.h. in diesem Fall für drei Flügel, ausgeführt wird. In der Maschinendrehachse verläuft eine Kolbenstange 4, auf der ein Haupt-Servozylinder 5 angeordnet ist. Auf der, der Nabe 3 gegenüber liegenden Seite ist ein Hilfs-Servozylinder 6 angeordnet. Der Verstelllenker 7 des Haupt-Servozylinders 5 sowie der Verstelllenker 8 des Hilfs-Servozylinders 6 sind an der Verstellkurbel 9 versetzt angeordnet, wobei die Verstellkurbel 9 direkt mit dem Laufradflügel 2 (hier nicht dargestellt) verbunden ist. Der versetzte Angriffspunkt der Verstelllenker 7 und 8 kann einen Winkel von 90° bis 120° einschließen (hier dargestellt sind ca. 90°).

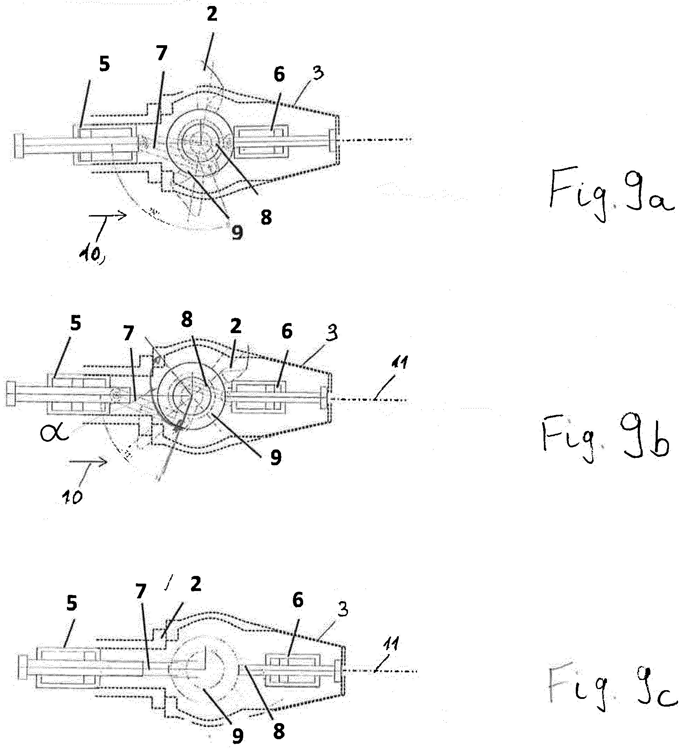

Fig. 9a bis Fig. 9e zeigen die Positionen der Laufradflügel 2 sowie der Servozylinder 5, 6 für verschiedene Betriebszustände. Um die Verstelleinrichtung herum ist die Nabe 3 angeordnet, die im Betriebszustand von Wasser umspült ist.

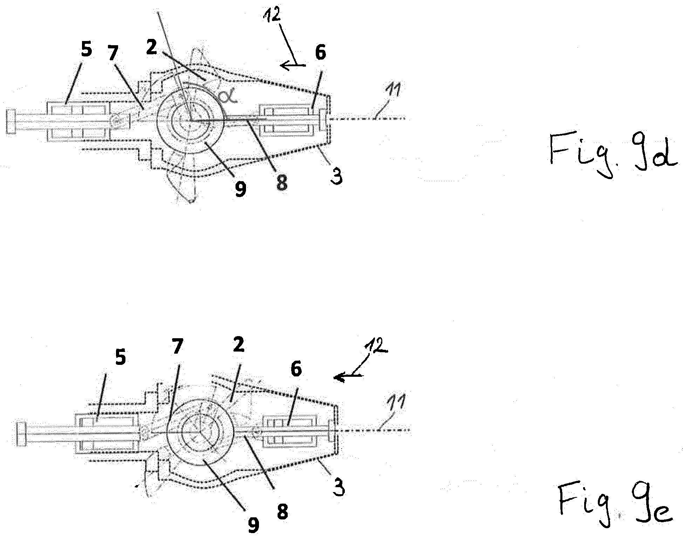

Fig. 9 a zeigt den Turbinenbetrieb der reversiblen Axialturbine mit minimaler Flügelöffnung, bei der das Wasser entsprechend Pfeil 10 von links kommt und sich die Turbine somit gegen den Uhrzeiger dreht. Der Angriffspunkt des Verstelllenkers 7 des Hauptservozylinders 5 schließt dabei einen Winkel von - 110° (entspricht 250°) gegen die Zylinderachse ein.

Fig. 9b zeigt einen Betriebszustand der Axialturbine im Turbinenbetrieb mit maximaler Flügelöffnung, wobei hier der Wasserstrom ebenfalls gemäß Pfeil 10 von links kommt und sich die Turbine gegen den Uhrzeiger dreht. Der Wasserstrom erfolgt somit vom Oberwasser zum Unterwasser des Kraftwerkes. Der Winkel zwischen Angriffspunkt des Verstelllenkers 7 und horizontaler Achse beträgt hier -70° (entspricht 290°), wobei die Maschinendrehachse mit 11 bezeichnet ist.

Fig. 9c stellt nun die kritische Situation dar, bei der der Verstelllenker 7 des Hauptservozylinders 5 im Totpunkt angekommen ist und somit keine Kraft für eine weitere Verstellung der Flügel 2 aufbringen kann. Somit wird erfindungsgemäß ca. 20° vor und 20° nach dieser Stellung der Hauptservozylinder 5 drucklos geschaltet und der Hilfsservozylinder 6 aktiviert. Durch die versetzte Anordnung der Angriffspunkte der Verstelllenker 7 und 8 kann somit der Totpunkt des Hauptservozylinders 5 samt Verstelllenker 7 überwunden werden. Die restliche Zeit bleibt der Hilfsservozylinder 6 drucklos geschaltet und läuft nur mit.

In Fig. 9d ist dann der Pumpbetrieb oder auch ein Turbinenbetrieb in 2. Richtung dargestellt, wobei hier der Wasserstrom gemäß Pfeil 12 von rechts kommt und die Drehrichtung der Axialturbine im Uhrzeigersinn ist. Bei minimaler Flügelöffnung gemäß Fig. 9d beträgt der Winkel des Verstelllenkers 7 des Hauptservozylinders 5 zur horizontalen Achse +70°.

Wird die Axialturbine im Pumpbetrieb oder im Turbinenbetrieb in 2. Richtung mit maximaler Flügelöffnung betrieben, ergibt sich eine Position wie in Fig. 9e dargestellt, mit einem Winkel von 110° und einer Strömungsrichtung von rechts gemäß Pfeil 12, was zu einer Drehrichtung im Uhrzeigersinn führt.

Die hier angegebenen Winkel des Verstelllenkers 7 zur Achse sind beispielhaft und können auch geringfügig variieren. Die Stellung der Verstelllenker bei maximaler und minimaler Flügelöffnung ist hierbei von der Flügelkonstruktion abhängig. Der Bereich um den Totpunkt kann ebenfalls variieren, je nach Versetzungswinkel der Angriffspunkte der Verstelllenker 7 und 8 und der durch den Hilfsservozylinder 6 aufbringbaren Kraft. Wesentlich ist jedoch, dass in diesem Bereich der Hauptservozylinder 5 drucklos geschalten wird und außerhalb des Bereichs der Hilfsservozylinder 6 drucklos geschalten ist.

Die Erfindung ist nicht durch die Zeichnungen beschränkt. Es könnte somit auch eine vollständige Drehung der Laufradflügel in die Gegenrichtung zur in Fig. 5a bis 5h gezeigten Richtung (d.h. im Uhrzeigersinn) erfolgen. Beispielsweise kann auch der Aufbau der Servozylinder anders aussehen.

## Patentansprüche

1. Verstelleinrichtung für die Laufradflügel von Turbinen, die an einer Nabe angeordnet sind, wobei ein hydraulischer Servozylinder (5) vorgesehen ist, wobei ein weiterer Servozylinder (6) vorgesehen ist, **dadurch gekennzeichnet, dass** die Verstelllenker (7, 8) der Servozylinder (5, 6) mit einem Ende an einer mit der Achse
(3) des Laufradflügels (2) fest verbundenen Verstellkurbel (9) drehbar gelagert sind und eine Bewegung für eine 360° Drehung des Laufradflügels (2) ermöglichen.

2. Verstelleinrichtung nach Anspruch 1, **dadurch gekennzeichnet, dass** der hydraulische Zylinder als Haupt-Servozylinder (5) und der weitere Servozylinder als Hilfs-Servozylinder (6) vorgesehen ist, der dem Haupt-Servozylinder (5) gegenüberliegend angeordnet ist und dessen Verstelllenker (8) unter einem Winkel (α) versetzt gegenüber dem Verstelllenker (7) des Haupt-Servozylinders (5) an der Verstellkurbel (9) angeordnet ist.

3. Verstelleinrichtung nach Anspruch 2, **dadurch gekennzeichnet, dass** der Versetzungswinkel (α) zwischen den Angriffspunkten der Verstelllenker (7, 8) des Haupt-Servozylinders (5) und Hilfs-Servozylinders (6) zwischen 60° und 120° beträgt.

4. Verstelleinrichtung nach einem der Ansprüche 2 oder 3, **dadurch gekennzeichnet, dass** der Hilfs-Servozylinder (6) eine Kraft von zwischen 10 und 30 %, vorzugsweise etwa 20% des Haupt-Servozylinders (5) aufweist.

5. Verstelleinrichtung nach einem der Ansprüche 2 bis 4, **dadurch gekennzeichnet, dass** der Hilfs-Servozylinder (6) im Bereich des Totpunktes des Verstelllenkers des Haupt-Servozylinders (5) die Flügelverstellung übernimmt und der Haupt-Servozylinder (5) drucklos geschaltet ist, wobei der Bereich etwa 20° vor und etwa 20° nach dem Totpunkt betragen kann.

6. Verstelleinrichtung nach Anspruch 5, **dadurch gekennzeichnet, dass** der Hilfs-Servozylinder (6) den übrigen Teil des Hubs drucklos ist.

7. Verstelleinrichtung nach Anspruch 1, **dadurch gekennzeichnet, dass** die Lager (13, 14) der Verstelllenker (7, 8) außermittig, d.h. außerhalb der Drehachse (17) der Nabe (3), angeordnet sind.

8. Verstelleinrichtung nach einem der Ansprüche 1 bis 7, **dadurch gekennzeichnet, dass** die Servozylinder (5, 6) konzentrisch angeordnet sind.

9. Verstelleinrichtung nach einem der Ansprüche 1 bis 7, **dadurch gekennzeichnet, dass** die Servozylinder (5, 6) als Einzelzylinder ausgeführt sind.

10. Verstelleinrichtung nach einem der Ansprüche 1 bis 9, **dadurch gekennzeichnet, dass** die Servozylinder (5, 6) eine gemeinsame Kolbenstange (4) aufweisen.

11. Verstelleinrichtung nach einem der Ansprüche 7 bis 10, **dadurch gekennzeichnet, dass** die Verstelllenker (7, 8) auf einem gemeinsamen Zapfen (15), der mit der Verstellkurbel (9) verbunden ist, angeordnet sind.

12. Verstelleinrichtung nach einem der Ansprüche 7 bis 10, **dadurch gekennzeichnet, dass** die Verstelllenker (7, 8) in unterschiedlichen Ebenen im Abstand von der Drehachse (17) der Nabe (3) angeordnet sind.

13. Verstelleinrichtung nach Anspruch 12, **dadurch gekennzeichnet, dass** die Verstelllenker (7, 8) an unterschiedlichen Zapfen (15, 15") angeordnet sind, die in einem Winkel um die Drehachse des Laufradflügels (2) zueinander angeordnet sind.

14. Verstelleinrichtung nach einem der Ansprüche 7 bis 13, **dadurch gekennzeichnet, dass** die Lager (13, 14) der Verstelllenker (7, 8) aller an der Nabe (3) angeordneten Laufradflügel (2) der Turbine (1) mit den gleichen Servozylindern (5, 6) verbunden sind.

15. Verstelleinrichtung nach einem der Ansprüche 7 bis 14, **dadurch gekennzeichnet, dass** in jeder Kurbelstellung von mindestens einem Verstelllenker (7, 8) eines Laufradflügels (2) der Turbine (1) ein Drehmoment auf die Verstellkurbel (9) des Laufradflügels (2) erzeugt wird.

## Claims

1. Adjusting device for turbine rotor blades mounted on a hub, where a hydraulic servo-cylinder (5) is provided as well as another servo-cylinder (6), **characterized in that** one end of the adjusting rods (7, 8) of the servo-cylinders (5, 6) is swivel mounted at an adjusting crank (9) rigidly connected to the axis (3) of the rotor blade (2) and allows movement to rotate the rotor blade (2) through 360 degrees.

2. Adjusting device according to Claim 1, **characterized in that** the hydraulic cylinder is provided as the main servo-cylinder (5) and the other servo-cylinder as an auxiliary servo-cylinder (6), which is arranged opposite the main servo-cylinder (5), while its adjusting rod (8) is disposed on the adjusting crank (9) opposite the adjusting rod (7) of the main servo-cylinder (5) and offset at an angle (α).

3. Adjusting device according to Claim 2, **characterized in that** the angle (α) of offset between the points of application of the adjusting rods (7, 8) of the main servo-cylinder (5) and the auxiliary servo-cylinder (6) is between 60° and 120°.

4. Adjusting device according to one of Claims 2 or 3, **characterized in that** the auxiliary servo-cylinder (6) applies a force that is between 10 and 30%, preferably approximately 20%, of the force applied by the main servo-cylinder (5).

5. Adjusting device according to one of Claims 2 to 4, **characterized in that** the auxiliary servo-cylinder (6) takes over blade adjustment in the region of the dead center of the adjusting rod of the main servo-cylinder (5) and the main servo-cylinder (5) is depressurized, where the region can be approximately 20° before and 20° after the dead center position.

6. Adjusting device according to Claim 5, **characterized in that** the auxiliary servo-cylinder (6) is pressure-free for the remainder of the stroke.

7. Adjusting device according to Claim 1, **characterized in that** the bearings (13, 14) of the adjusting rods (7, 8) are arranged eccentrically, i.e. outside the rotating axis (17) of the hub (3).

8. Adjusting device according to one of Claims 1 to 7, **characterized in that** the servo-cylinders (5, 6) are arranged concentrically.

9. Adjusting device according to one of Claims 1 to 7, **characterized in that** the servo-cylinders (5, 6) are designed as individual cylinders.

10. Adjusting device according to one of Claims 1 to 9, **characterized in that** the servo-cylinders (5, 6) have a shared piston rod (4).

11. Adjusting device according to one of Claims 7 to 10, **characterized in that** the adjusting rods (7, 8) are arranged on a shared pin (15), which is connected to the adjusting crank (9).

12. Adjusting device according to one of Claims 7 to 10, **characterized in that** the adjusting rods (7, 8) are arranged on different levels at a distance from the rotation axis (17) of the hub (3).

13. Adjusting device according to Claim 12, **characterized in that** the adjusting rods (7, 8) are arranged at different pins (15, 15") disposed at an angle to one another round the rotation axis of the rotor blade (2).

14. Adjusting device according to one of Claims 7 to 13, **characterized in that** the bearings (13, 14) of the adjusting rods (7, 8) of all rotor blades (2) of the turbine (1) arranged on the hub (3) are connected to the same servo-cylinders (5, 6).

15. Adjusting device according to one of Claims 7 to 14, **characterized in that** a torque is generated on the adjusting crank (9) of the rotor blade (2) in each position of the crank of at least one adjusting rod (7, 8) of the turbine (1) rotor blade (2).

## Revendications

1. Dispositif de réglage d'ailettes d'aube de turbine qui sont disposées sur le moyeu, il est prévu un servovérin hydraulique (5) et un autre servovérin (6), **caractérisé en ce que** les tiges de réglage (7, 8) des servovérins (5, 6) sont montées en rotation avec une extrémité sur une bielle de réglage (9) reliée à demeure à l'axe de l'ailette (2) d'aube et permettent un mouvement pour une rotation à 360° de l'ailette (2) d'aube.

2. Dispositif de réglage selon la revendication 1, **caractérisé en ce que** le vérin hydraulique est conçu comme un servovérin principal (5) et l'autre servovérin comme un servovérin auxiliaire (6) qui est disposé en regard du servovérin principal (5) et dont la tige de réglage (8) est décalé selon un angle (α) par rapport à la tige de réglage (7) du servovérin principal (5) sur la bielle de réglage (9).

3. Dispositif de réglage selon la revendication 2, **caractérisé en ce que** l'angle de décalage (α) entre les points d'application des tiges de réglage (7, 8) du servovérin principal (5) et du servovérin auxiliaire (6) est compris entre 60° et 120°.

4. Dispositif de réglage selon l'une quelconque des revendications 2 ou 3, **caractérisé en ce que** le servovérin auxiliaire (6) présente une force comprise entre 10 et 30 %, de préférence environ de 20 % de celle du servovérin principal (5).

5. Dispositif de réglage selon l'une quelconque des revendications 2 à 4, **caractérisé en ce que** le servovérin auxiliaire (6) dans la zone du point mort de la tige de réglage du servovérin principal (5) amène l'ailette à se déplacer et le servovérin principal (5) est mis hors pression, la zone peut être d'environ 20° avant ou après le point mort.

6. Dispositif de réglage selon la revendication 5, **caractérisé en ce que** le servovérin auxiliaire (6) est sans pression pour la partie restante de la course.

7. Dispositif de réglage selon la revendication 1, **caractérisé en ce que** les paliers (13, 14) des tiges de réglage (7, 8) sont excentrés, autrement dit, sont disposés à l'extérieur de l'axe de rotation (17) du moyeu (3).

8. Dispositif de réglage selon l'une quelconque des revendications 1 à 7, **caractérisé en ce que** les servovérins (5, 6) sont disposés concentriquement.

9. Dispositif de réglage selon l'une quelconque des revendications 1 à 7, **caractérisé en ce que** les servovérins (5, 6) sont conçus comme des cylindres individuels.

10. Dispositif de réglage selon l'une quelconque des revendications 1 à 9, **caractérisé en ce que** les servovérins (5, 6) présentent une tige de piston commune (4).

11. Dispositif de réglage selon l'une quelconque des revendications 7 à 10, **caractérisé en ce que** les tiges de réglage (7, 8) sont disposées sur un tenon commun (15) qui est relié à la bielle de réglage (9).

12. Dispositif de réglage selon l'une quelconque des revendications 7 à 10, **caractérisé en ce que** les tiges de réglage (7, 8) sont disposées à différents niveaux à distance de l'axe de rotation (17) du moyeu (3).

13. Dispositif de réglage selon la revendication 12, **caractérisé en ce que** les tiges de réglage (7, 8) sont disposées sur différents tenons (15, 15") qui sont disposés les uns par rapport aux autres selon un angle autour de l'axe de rotation de l'ailette d'aube (2).

14. Dispositif de réglage selon l'une quelconque des revendications 7 à 13, **caractérisé en ce que** les paliers (13, 14) des tiges de réglage (7, 8) de toutes les ailettes (2) d'aube de la turbine disposées sur le moyeu (3) sont reliés aux mêmes servovérins (5, 6).

15. Dispositif selon l'une quelconque des revendications 7 à 14, **caractérisé en ce que** dans chaque position de bielle d'au moins une tige de réglage (7, 8) d'une ailette (2) d'aube de la turbine (1) se produit un couple de rotation sur la bielle de réglage (9) de l'ailette (2) d'aube.
